Europäisches Patentamt

European Patent Office

Office européen des brevets

(19)

(11) Publication number: **0 321 081 B1**

(12) **EUROPEAN PATENT SPECIFICATION**

(45) Date of publication of patent specification: **22.07.92**   (51) Int. Cl.⁵: **C02F 3/22**, E02B 1/00

(21) Application number: **88310315.2**

(22) Date of filing: **02.11.88**

(54) **Air supply method whereby water is raised for aeration.**

(30) Priority: **02.11.87 JP 278104/87**

(43) Date of publication of application:
**21.06.89 Bulletin 89/25**

(45) Publication of the grant of the patent:
**22.07.92 Bulletin 92/30**

(84) Designated Contracting States:
**CH DE FR GB LI NL SE**

(56) References cited:
**EP-A- 0 239 693**

(73) Proprietor: **Kaiyo Kogyo Kabushiki Kaisha
1-11 Akihabara
Taito-ku Tokyo(JP)**

(72) Inventor: **Makino, Masahiko
19-6, Maehara-higashi 5-chome
Funabashi, Chiba(JP)**

(74) Representative: **Godwin, Edgar James et al
MARKS & CLERK 57-60 Lincoln's Inn Fields
London, WC2A 3LS(GB)**

EP 0 321 081 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to the processing of water in natural or artificial water resources, and more particularly to a method of supplying air at particular periodic intervals for causing water to be raised under the action of the supplied air. The method may be used in those applications where the water resources require aeration, water cleaning, antifreezing, etc. It may also be used in distributing any chemical agents, such as waterweed killers, throughout the water.

A conventional apparatus that provides the water raising functions as mentioned above includes an air supply chamber which is located below a vertical water raising tubular passage and supplies air in the form of individual successive air bubbles into the tubular passage at specific periodic intervals. Different types of constructions for the apparatus are known (such as those disclosed in the Japanese laying-open of patent application No. 58-70895 and Japanese Publication of utility model application No. 58-17699).

An earlier solution proposed by the present applicant applies to a tubular passage of a relatively small diameter, e.g., about 20 cm, whereby the relationships between the quantity of air to be supplied at one time and the given diameter of the tubular passage are defined to provide a single air bubble whose spheric volume is determined by the particular diameter of the tubular passage (as disclosed in the Japanese laying-open of patent application No. 62-258199).

The conventional apparatus has no requirements for the capacity of the air supply chamber defined in relation to the specific diameter of the tubular passage, and all air supply chambers are designed to have the capacity regardless of the different diameters of the tubular passages which are actually used. As the relationships between the particular diameter of the tubular passage and the corresponding volumetric amount of an air bubble have not been defined. it often occurs that there will be unbalance between the two. In fact, this makes the apparatus less efficient.

As described above, the standards for determining the capacity of the air supply chamber in relation to the diameter of the tubular passage have not yet been established, and it is difficult to identify how the capacity is correlated to the resulting efficiency. In this sense, the expected efficiency will be less reliable.

The invention as described in the earlier mentioned Japanese laying-open of patent application No. 62-258199 may be applied to an about 20 cm-diameter tubular passage, but cannot perform well with a greater diameter tubular passage.

EP-A-0 239 693 discloses a method of supplying air at specific periodic intervals and forming single air bubbles one after another, each single bubble raising water under its suction and boosting action through a tubular passage construction, the method comprising supplying each single quantity of air at the said periodic intervals for forming the corresponding air bubble through the tubular passage construction.

In that document, the tubular passage construction has a diameter of 20 or 40 cm and each quantity of air has a volumetric capacity range of 0.3 to 1.25 times (preferably 0. 75 to 1.25 times) the spheric volume having the said diameter. The time interval between successive bubbles is required to have a definite relationship to the length of the tubular passage construction.

The aim of the present invention is to increase efficiency.

According to the invention, as defined in claim 1, the tubular passage construction has a diameter of 50 cm, or more, each quantity of air having a volumetric capacity range of 0.5 to 3.0 times the spheric volume having the diameter of the tubular passage construction.

Tables 1 to 6 on the following pages show the values for the capacity of the air supply chamber for each different length of the tubular passage, when its diameter is 30 cm (Tables 1 to 3) or 50 cm (Tables 4 to 6). Those values have been obtained from experiments. The results show that, for the same air supply rate, the same volumetric capacity factor, and the same tubular passage length, an increase in diameter produces a substantial increase in the volumetric flow rate (area x linear flow rate).

2

## FLOW RATE DATA

Table-1 (m/sec.)

| MODELS | L - 3 | | | | | | | | | | | | | | |
|---|---|---|---|---|---|---|---|---|---|---|---|---|---|---|---|
| Air Chamber Capacity (ℓ) | 4.2 ℓ | | | 7.1 ℓ | | | 10.6 ℓ | | | 14.1 ℓ | | | 17.6 ℓ | | |
| FACTOR | 0.30 | | | 0.50 | | | 0.75 | | | 1.00 | | | 1.25 | | |
| Air Supply Rate (ℓ/min.) \ LENGTH | 5 m | 10 m | 15 m | 5 m | 10 m | 15 m | 5 m | 10 m | 15 m | 5 m | 10 m | 15 m | 5 m | 10 m | 15 m |
| 100 | 0.31 | 0.50 | 0.70 | 0.51 | 0.78 | 0.94 | 0.57 | 0.85 | 0.99 | 0.64 | 0.98 | 1.07 | 0.61 | 0.92 | 1.00 |
| 200 | 0.34 | 0.63 | 0.85 | 0.63 | 0.91 | 1.12 | 0.69 | 1.00 | 1.18 | 0.82 | 1.16 | 1.28 | 0.77 | 1.09 | 1.19 |
| 300 | 0.53 | 0.75 | 0.98 | 0.73 | 1.04 | 1.27 | 0.82 | 1.13 | 1.36 | 0.96 | 1.19 | 1.47 | 0.90 | 1.22 | 1.38 |
| 400 | 0.63 | 0.85 | 1.09 | 0.83 | 1.16 | 1.41 | 0.92 | 1.25 | 1.50 | 1.07 | 1.40 | 1.60 | 1.00 | 1.34 | 1.52 |
| 500 | 0.69 | 0.92 | 1.19 | 0.94 | 1.25 | 1.52 | 1.00 | 1.34 | 1.61 | 1.16 | 1.48 | 1.72 | 1.09 | 1.44 | 1.65 |
| 600 | 0.74 | 1.00 | 1.28 | 1.03 | 1.34 | 1.63 | 1.08 | 1.42 | 1.70 | 1.23 | 1.55 | 1.82 | 1.17 | 1.52 | 1.75 |
| 700 | 0.78 | 1.05 | 1.37 | 1.10 | 1.41 | 1.71 | 1.15 | 1.38 | 1.78 | 1.31 | 1.62 | 1.90 | 1.23 | 1.60 | 1.86 |
| 800 | 0.82 | 1.10 | 1.43 | 1.15 | 1.48 | 1.78 | 1.20 | 1.55 | 1.85 | 1.38 | 1.69 | 1.99 | 1.30 | 1.66 | 1.95 |
| 900 | 0.86 | 1.15 | 1.48 | 1.21 | 1.52 | 1.84 | 1.25 | 1.62 | 1.92 | 1.42 | 1.75 | 2.07 | 1.36 | 1.72 | 2.04 |
| 1000 | 0.90 | 1.20 | 1.53 | 1.25 | 1.57 | 1.89 | 1.30 | 1.67 | 1.98 | 1.49 | 1.80 | 2.14 | 1.42 | 1.77 | 2.02 |
| 1250 | 0.96 | 1.29 | 1.62 | 1.33 | 1.62 | 1.98 | 1.41 | 1.79 | 2.11 | 1.59 | 1.91 | 2.30 | 1.55 | 1.90 | 2.31 |
| 1500 | 0.99 | 1.36 | 1.69 | 1.39 | 1.71 | 2.50 | 1.49 | 1.86 | 2.22 | 1.67 | 1.99 | 2.44 | 1.65 | 1.98 | 2.45 |
| 1750 | | | | | | | | | | | | | | | |
| 2000 | | | | | | | | | | | | | | | |

# FLOW RATE DATA

Table-2 (m/sec.)

| MODELS | L - 3 | | | | | | | | | | | | | | |
|---|---|---|---|---|---|---|---|---|---|---|---|---|---|---|---|
| Air Chamber Capacity (ℓ) | 21.1 ℓ | | | 28.2 ℓ | | | 42.3 ℓ | | | 56.4 ℓ | | | 70.5 ℓ | | |
| FACTOR | 1.50 | | | 2.00 | | | 3.00 | | | 4.00 | | | 5.00 | | |
| Air LENGTH Supply Rate (ℓ/min.) | 5 m | 10 m | 15 m | 5 m | 10 m | 15 m | 5 m | 10 m | 15 m | 5 m | 10 m | 15 m | 5 m | 10 m | 15 m |
| 100 | 0.58 | 0.81 | 0.92 | 0.51 | 0.78 | 0.93 | 0.50 | 0.75 | 0.88 | 0.34 | 0.46 | 0.72 | 0.31 | 0.43 | 0.68 |
| 200 | 0.71 | 0.96 | 1.14 | 0.63 | 0.89 | 1.09 | 0.61 | 0.87 | 1.04 | 0.43 | 0.58 | 0.84 | 0.40 | 0.48 | 0.80 |
| 300 | 0.84 | 1.10 | 1.32 | 0.73 | 1.00 | 1.23 | 0.71 | 0.98 | 1.16 | 0.51 | 0.68 | 0.96 | 0.48 | 0.58 | 0.92 |
| 400 | 0.93 | 1.23 | 1.45 | 0.83 | 1.10 | 1.36 | 0.80 | 1.07 | 1.31 | 0.60 | 0.79 | 1.06 | 0.55 | 0.68 | 1.04 |
| 500 | 1.03 | 1.34 | 1.58 | 0.94 | 1.20 | 1.47 | 0.89 | 1.16 | 1.43 | 0.67 | 0.88 | 1.17 | 0.62 | 0.76 | 1.14 |
| 600 | 1.10 | 1.43 | 1.70 | 1.03 | 1.28 | 1.49 | 0.97 | 1.24 | 1.51 | 0.73 | 0.98 | 1.27 | 0.70 | 0.83 | 1.23 |
| 700 | 1.17 | 1.52 | 1.80 | 1.10 | 1.36 | 1.69 | 1.05 | 1.32 | 1.62 | 0.81 | 1.06 | 1.36 | 0.76 | 0.90 | 1.33 |
| 800 | 1.25 | 1.58 | 1.90 | 1.18 | 1.45 | 1.78 | 1.13 | 1.39 | 1.71 | 0.88 | 1.14 | 1.45 | 0.82 | 0.98 | 1.41 |
| 900 | 1.32 | 1.64 | 1.98 | 1.25 | 1.52 | 1.86 | 1.19 | 1.45 | 1.79 | 0.94 | 1.21 | 1.53 | 0.88 | 1.04 | 1.50 |
| 1000 | 1.38 | 1.69 | 2.05 | 1.32 | 1.59 | 1.94 | 1.25 | 1.52 | 1.86 | 1.00 | 1.28 | 1.62 | 0.94 | 1.17 | 1.58 |
| 1250 | 1.51 | 1.82 | 2.21 | 1.47 | 1.74 | 2.11 | 1.38 | 1.67 | 2.00 | 1.13 | 1.45 | 1.80 | 1.05 | 1.33 | 1.75 |
| 1500 | 1.62 | 1.93 | 2.35 | 1.58 | 1.87 | 2.24 | 1.50 | 1.77 | 2.12 | 1.23 | 1.59 | 1.93 | 1.15 | 1.45 | 1.89 |
| 1750 | | | | | | | | | | | | | | | |
| 2000 | | | | | | | | | | | | | | | |

FLOW RATE DATA

Table-3      (m/sec.)

| MODELS | L - 3 | | | | | | | | | | | | | | |
|---|---|---|---|---|---|---|---|---|---|---|---|---|---|---|---|
| Air Chamber Capacity ($\ell$) | 105.8 $\ell$ | | | 141.0 $\ell$ | | | | | | | | | | | |
| FACTOR | 7.50 | | | 10.00 | | | | | | | | | | | |
| Air Supply Rate ($\ell$/min.) \ LENGTH | 5 m | 10 m | 15 m | 5 m | 10 m | 15 m | 5 m | 10 m | 15 m | 5 m | 10 m | 15 m | 5 m | 10 m | 15 m |
| 100 | 0.25 | 0.38 | 0.66 | 0.21 | 0.32 | 0.52 | | | | | | | | | |
| 200 | 0.32 | 0.48 | 0.76 | 0.29 | 0.41 | 0.66 | | | | | | | | | |
| 300 | 0.40 | 0.58 | 0.89 | 0.36 | 0.50 | 0.76 | | | | | | | | | |
| 400 | 0.47 | 0.67 | 0.98 | 0.44 | 0.59 | 0.87 | | | | | | | | | |
| 500 | 0.54 | 0.76 | 1.07 | 0.51 | 0.66 | 0.98 | | | | | | | | | |
| 600 | 0.61 | 0.84 | 1.16 | 0.58 | 0.74 | 1.06 | | | | | | | | | |
| 700 | 0.66 | 0.90 | 1.25 | 0.64 | 0.82 | 1.15 | | | | | | | | | |
| 800 | 0.73 | 0.97 | 1.33 | 0.70 | 0.88 | 1.22 | | | | | | | | | |
| 900 | 0.79 | 1.04 | 1.40 | 0.76 | 0.95 | 1.30 | | | | | | | | | |
| 1000 | 0.84 | 1.11 | 1.47 | 0.82 | 1.01 | 1.36 | | | | | | | | | |
| 1250 | 0.96 | 1.26 | 1.65 | 0.95 | 1.36 | 1.50 | | | | | | | | | |
| 1500 | 1.06 | 1.39 | 1.78 | 1.05 | 1.30 | 1.65 | | | | | | | | | |
| 1750 | | | | | | | | | | | | | | | |
| 2000 | | | | | | | | | | | | | | | |

5

## FLOW RATE DATA

Table-4             (m/sec.)

| MODELS | L - 5 | | | | | | | | | | | | | | |
|---|---|---|---|---|---|---|---|---|---|---|---|---|---|---|---|
| Air Chamber Capacity (ℓ) | 19.6 ℓ | | | 32.7 ℓ | | | 49.1 ℓ | | | 65.4 ℓ | | | 81.8 ℓ | | |
| FACTOR | 0.30 | | | 0.50 | | | 0.75 | | | 1.00 | | | 1.25 | | |
| Air Supply Rate (ℓ/min.) \\ LENGTH | 5 m | 10 m | 15 m | 5 m | 10 m | 15 m | 5 m | 10 m | 15 m | 5 m | 10 m | 15 m | 5 m | 10 m | 15 m |
| 100 | | | | | | | | | | | | | | | |
| 200 | 0.20 | 0.31 | 0.50 | 0.47 | 0.63 | 0.85 | 0.47 | 0.70 | 0.88 | 0.53 | 0.80 | 0.94 | 0.65 | 0.79 | 0.96 |
| 300 | 0.25 | 0.43 | 0.60 | 0.52 | 0.72 | 0.94 | 0.53 | 0.80 | 1.00 | 0.59 | 0.90 | 1.06 | 0.61 | 0.87 | 1.06 |
| 400 | 0.32 | 0.50 | 0.67 | 0.56 | 0.80 | 1.02 | 0.58 | 0.88 | 1.08 | 0.65 | 0.97 | 1.16 | 0.68 | 0.94 | 1.19 |
| 500 | 0.37 | 0.56 | 0.75 | 0.60 | 0.88 | 1.11 | 0.63 | 0.95 | 1.17 | 0.70 | 1.03 | 1.25 | 0.73 | 1.00 | 1.27 |
| 600 | 0.42 | 0.62 | 0.80 | 0.64 | 0.95 | 1.17 | 0.68 | 1.02 | 1.23 | 0.74 | 1.10 | 1.33 | 0.78 | 1.07 | 1.35 |
| 700 | 0.46 | 0.67 | 0.85 | 0.68 | 1.00 | 1.23 | 0.72 | 1.07 | 1.31 | 0.77 | 1.15 | 1.40 | 0.83 | 1.12 | 1.41 |
| 800 | 0.50 | 0.71 | 0.91 | 0.72 | 1.05 | 1.28 | 0.76 | 1.12 | 1.37 | 0.82 | 1.20 | 1.46 | 0.87 | 1.17 | 1.47 |
| 900 | 0.54 | 0.75 | 0.95 | 0.75 | 1.09 | 1.34 | 0.79 | 1.17 | 1.42 | 0.84 | 1.23 | 1.52 | 0.91 | 1.21 | 1.53 |
| 1000 | 0.57 | 0.78 | 0.99 | 0.78 | 1.13 | 1.38 | 0.83 | 1.21 | 1.47 | 0.87 | 1.26 | 1.57 | 0.93 | 1.26 | 1.58 |
| 1250 | 0.65 | 0.86 | 1.10 | 0.85 | 1.22 | 1.46 | 0.89 | 1.30 | 1.58 | 0.94 | 1.36 | 1.69 | 1.02 | 1.35 | 1.70 |
| 1500 | 0.72 | 0.92 | 1.19 | 0.90 | 1.28 | 1.55 | 0.95 | 1.37 | 1.66 | 0.99 | 1.44 | 1.78 | 1.08 | 1.43 | 1.81 |
| 1750 | 0.78 | 0.98 | 1.26 | 0.95 | 1.33 | 1.60 | 1.00 | 1.44 | 1.75 | 1.04 | 1.51 | 1.88 | 1.14 | 1.50 | 1.90 |
| 2000 | 0.83 | 1.04 | 1.37 | 1.00 | 1.38 | 1.66 | 1.05 | 1.49 | 1.82 | 1.09 | 1.56 | 1.96 | 1.19 | 1.56 | 1.98 |

6

## FLOW RATE DATA

Table-5         (m/sec.)

| MODELS | L - 5 | | | | | | | | | | | | | | |
|---|---|---|---|---|---|---|---|---|---|---|---|---|---|---|---|
| Air Chamber Capacity (l) | 98.1 l | | | 130.8 l | | | 195.2 l | | | 261.6 l | | | 327.0 l | | |
| FACTOR | 1.50 | | | 2.00 | | | 3.00 | | | 4.00 | | | 5.00 | | |
| Air Supply Rate (l/min.) / LENGTH | 5 m | 10 m | 15 m | 5 m | 10 m | 15 m | 5 m | 10 m | 15 m | 5 m | 10 m | 15 m | 5 m | 10 m | 15 m |
| 100 | | | | | | | | | | | | | | | |
| 200 | 0.52 | 0.71 | 0.88 | 0.46 | 0.61 | 0.80 | 0.43 | 0.59 | 0.75 | 0.21 | 0.32 | 0.46 | 0.17 | 0.29 | 0.40 |
| 300 | 0.56 | 0.80 | 1.00 | 0.50 | 0.69 | 0.88 | 0.47 | 0.66 | 0.84 | 0.32 | 0.40 | 0.53 | 0.22 | 0.36 | 0.47 |
| 400 | 0.62 | 0.90 | 1.10 | 0.54 | 0.76 | 0.95 | 0.51 | 0.72 | 0.91 | 0.37 | 0.47 | 0.59 | 0.26 | 0.42 | 0.55 |
| 500 | 0.67 | 0.97 | 1.20 | 0.58 | 0.82 | 1.04 | 0.55 | 0.78 | 0.98 | 0.41 | 0.54 | 0.66 | 0.30 | 0.47 | 0.61 |
| 600 | 0.72 | 1.05 | 1.27 | 0.62 | 0.89 | 1.09 | 0.60 | 0.84 | 1.05 | 0.45 | 0.60 | 0.72 | 0.35 | 0.52 | 0.66 |
| 700 | 0.75 | 1.10 | 1.34 | 0.65 | 0.95 | 1.15 | 0.62 | 0.88 | 1.10 | 0.49 | 0.66 | 0.77 | 0.38 | 0.56 | 0.71 |
| 800 | 0.80 | 1.15 | 1.41 | 0.70 | 1.00 | 1.21 | 0.66 | 0.94 | 1.16 | 0.53 | 0.73 | 0.83 | 0.42 | 0.61 | 0.77 |
| 900 | 0.83 | 1.21 | 1.46 | 0.73 | 1.05 | 1.27 | 0.70 | 0.99 | 1.21 | 0.57 | 0.79 | 0.86 | 0.46 | 0.66 | 0.81 |
| 1000 | 0.86 | 1.26 | 1.52 | 0.76 | 1.09 | 1.33 | 0.74 | 1.03 | 1.26 | 0.60 | 0.85 | 0.92 | 0.50 | 0.70 | 0.86 |
| 1250 | 0.96 | 1.39 | 1.66 | 0.85 | 1.19 | 1.45 | 0.82 | 1.15 | 1.35 | 0.64 | 0.98 | 1.04 | 0.57 | 0.80 | 0.97 |
| 1500 | 1.04 | 1.50 | 1.79 | 0.94 | 1.28 | 1.57 | 0.90 | 1.23 | 1.46 | 0.72 | 1.10 | 1.15 | 0.68 | 0.88 | 1.07 |
| 1750 | 1.11 | 1.59 | 1.91 | 1.00 | 1.36 | 1.66 | 0.95 | 1.30 | 1.54 | 0.80 | 1.22 | 1.25 | 0.74 | 0.98 | 1.16 |
| 2000 | 1.16 | 1.67 | 2.03 | 1.07 | 1.44 | 1.76 | 1.03 | 1.36 | 1.64 | 0.88 | 1.33 | 1.35 | 0.81 | 1.06 | 1.25 |

FLOW RATE DATA

Table-6                           (m/sec.)

| MODELS | L - 5 | | | | | | | | | | | | | | | | | |
|---|---|---|---|---|---|---|---|---|---|---|---|---|---|---|---|---|---|---|
| Air Chamber Capacity (ℓ) | 490.5 ℓ | | | 654.0 ℓ | | | | | | | | | | | | | | |
| FACTOR | 7.50 | | | 10.00 | | | | | | | | | | | | | | |
| Air Supply Rate (ℓ/min.) \ LENGTH | 5 m | 10 m | 15 m | 5 m | 10 m | 15 m | 5 m | 10 m | 15 m | 5 m | 10 m | 15 m | 5 m | 10 m | 15 m | | | |
| 100 | | | | | | | | | | | | | | | | | | |
| 200 | 0.16 | 0.21 | 0.34 | 0.14 | 0.15 | 0.30 | | | | | | | | | | | | |
| 300 | 0.21 | 0.27 | 0.41 | 0.17 | 0.21 | 0.37 | | | | | | | | | | | | |
| 400 | 0.25 | 0.32 | 0.47 | 0.21 | 0.27 | 0.43 | | | | | | | | | | | | |
| 500 | 0.29 | 0.37 | 0.53 | 0.24 | 0.31 | 0.48 | | | | | | | | | | | | |
| 600 | 0.33 | 0.42 | 0.57 | 0.27 | 0.35 | 0.53 | | | | | | | | | | | | |
| 700 | 0.37 | 0.46 | 0.63 | 0.30 | 0.39 | 0.56 | | | | | | | | | | | | |
| 800 | 0.41 | 0.50 | 0.68 | 0.33 | 0.41 | 0.61 | | | | | | | | | | | | |
| 900 | 0.45 | 0.54 | 0.72 | 0.37 | 0.47 | 0.66 | | | | | | | | | | | | |
| 1000 | 0.48 | 0.58 | 0.77 | 0.40 | 0.51 | 0.71 | | | | | | | | | | | | |
| 1250 | 0.56 | 0.68 | 0.87 | 0.48 | 0.60 | 0.80 | | | | | | | | | | | | |
| 1500 | 0.64 | 0.76 | 0.98 | 0.56 | 0.62 | 0.90 | | | | | | | | | | | | |
| 1750 | 0.72 | 0.84 | 1.06 | 0.61 | 0.75 | 0.98 | | | | | | | | | | | | |
| 2000 | 0.79 | 0.92 | 1.15 | 0.68 | 0.83 | 1.06 | | | | | | | | | | | | |

In each table,

(1) the capacity of the air supply chamber (ℓ) corresponds to the quantity of air that forms a single air bubble, and the figure in this column represents a factor by which the spheric volume having a diameter across the tubular passage is to be multiplied;

(2) the quantity of air supply is expressed as the value under the atmospheric pressure: and

(3) the air supply chamber is located 25 m deep beneath the water surface.

It is noted from those tables that, for a given capacity of the air supply chamber and a given actual length of the tubular passage, the rate of air flow becomes smaller as the quantity of air supply is smaller, and the rate of air flow becomes greater as the quantity of air supply becomes greater. It is also noted that, for a given quantity of air supply, the rate of air flow varies with the different capacities of the air supply chamber. When the capacity of the air supply chamber is substantially equal to 0.5 to 3.0 times the spheric volume having a diameter across the tubular passage, the rate of air flow becomes great. When it is equal to 0.5 to 0.75 times, however, it produces air bubbles at smaller intervals, and therefore the energy of those air bubbles which occur due to their inertia effect cannot be made full use of. It may be appreciated from this fact that for the practical purposes, the factors of between 0.75 and 1.5 provide the highest efficiency. Below 0.75, the amount of water that can be raised will become smaller as compared with the quantity of air supply, while above 1.5, the amount of water will be decreased noticebaly as compared with the quantity of air supply. It should also be noted that when the air supply chamber is designated adequately, the amount of air to be supplied from the air supply chamber at one time may correspond to the capacity of the air supply chamber, but when it is not designed adequately the amount of air will be smaller.

It has been described that air bubbles may be formed by supplying air from the air supply chamber at the periodic intervals. The air supply chamber should preferably be of the type that makes use of the siphon action, which has proved to be the most useful in terms of the simple construction, easy maintenance, trouble-free operation, etc. Other possible types may include those which make use of an automatic valve-operated pumping action, recipro-pumping action, and other known technologies. When the air supply chamber using the siphon action is used, it may be located around the bottom of the tubular passage, or may be located either at the bottom end or middle portion of the tubular passage, in which case a nozzle may be provided from which air is supplied into the tubular passage.

In all cases, the quantity of air that can be supplied from the air supply chamber at one time may correspond to 0.5 to 3.0 times the spheric volume defined across the diameter of the tubular passage. An air bubble that has thus been formed can be rising through the tubular passage with the average rate which is greater as compared with the quantity of air supply. Thus, the water can be raised with higher efficiency.

Those and other objects, advantages, and features of the present invention will become apparent from the detailed description of several preferred embodiment that follows by referring to the accompanying drawings, in which:

Fig. 1 is a partly broken-away front view of one typical construction of the apparatus that may be used in conjunction with the method of the present invention;

Fig. 2 is similar to Fig. 1, showing another typical construction of the apparatus for use in practising the method of the present invention;

Fig. 3 through 8 are graphical representations of the relationships between the amount of air supply and the corresponding rate of air or water flow through the tubular passage, Figs. 3 through 5 being for the 30 cm-diameter tubular passage having a length of 5 m, 10 m, and 15 m, respectively and Fig. 6 through 8 being for the 50 cm-diameter tubular passage having a length of 5 m, 10m, and 15 m, respectively; and

Fig. 9 is a graphical representation of the relationship between the rate of air or water flow and time.

The following examples are presented to illustrate the present invention, some of the examples being comparative examples.

## EXAMPLE 1

A tubular passage construction 1 has a diameter of 30 cm and a length of 5m (which corresponds to the actual length of the passage of an air bubble rising through the tubular passage), and is installed in its vertical position 25 m deep in the water. The tubular passage construction 1 includes an air supply chamber 2 below it which can contain 4.2 ℓ of air (which is equal to 0.3 times the spheric volume having a diameter across the tubular passage). Air is fed into the air supply chamber at the rate to 500ℓ per minute, from which 34 air bubbles per minute are formed. Those air bubbles enter the tubular passage one after another, each raising the water at the average rate of 0.69 m/sec through the actual length of the tubular passage 1.

## EXAMPLE 2

A tubular passage construction 1 has a diameter of 30 cm and a length of 10 m, and is installed in its vertical position 25 m deep in the water. It includes an air supply chamber 2 below it which can contain 4.2 ℓ of air (which is equal to 0.3 times the spheric volume having a diameter across the tubular passage). Air is fed into the air supply chamber at the rate of 500ℓ per minute, from which 34 air bubbles per minute are formed. Those air bubbles enter the tubular passage one after another, each raising the water at the average rate of 0.92 m/sec through the actual length of the tubular passage 1.

## EXAMPLE 3

A tubular passage construction 1 has a diameter of 30 cm and a length of 15 m, and is installed in its vertical position 25 m deep in the water. It includes an air supply chamber 2 below it which can contain 4.2 ℓ of air (which is equal to 0.3 times the spheric volume having a diameter across the tubular passage). Air is fed into the air supply chamber at the rate of 500ℓ per minute, from which 34 air bubbles per minute are formed. Those air bubbles enter the tubular passage one after another, each raising the water at the average rate of 1.19 m/sec through the actual length of the tubular passage 1.

## EXAMPLE 4

A tubular passage construction 1 has a diameter of 30 cm and a length of 5m, and is installed in its vertical position 25 m deep in the water. It includes an air supply chamber 2 below it which can contain

EP 0 321 081 B1

42.3ℓ of air (which is equal to 3.0 times the spheric volume having a diameter across the tubular passage). Air is fed into the air supply chamber at the rate of 500ℓ per minute, from which 3.4 air bubbles per minute are formed. Those air bubbles enter the tubular passage one after another, each raising the water at the average rate of 0.89 m/sec through the actual length of the tubular passage 1.

EXAMPLE 5

A tubular passage construction 1 has a diameter of 30 cm and a length of 10 m, and is installed in its vertical position 25 m deep in the water. It includes an air supply chamber 2 below it which can contain 42.3ℓ of air (which is equal to 3.0 times the spheric volume having a diameter across the tubular passage). Air is fed into the air supply chamber at the rate of 500 ℓ per minute, from which 3.4 air bubbles per minute are formed. Those air bubbles enter the tubular passage one after another, each raising the water at the average rate of 1.16 m/sec through the actual length of the tubular passage 1.

EXAMPLE 6

A tubular passage construction 1 has a diameter of 30 cm and a length of 15 m, and is installed in its vertical position 25 m deep in the water. It includes an air supply chamber 2 below it which can contain 42.3ℓ of air (which is equal to 3.0 times the spheric volume having a diameter across the tubular passage). Air is fed into the air supply chamber at the rate of 500ℓ per minute, from which 3.4 air bubbles per minute are formed. Those air bubbles enter the tubular passage one after another, each raising the water at the average rate of 1.43 m/sec through the actual length of the tubular passage 1.

EXAMPLE 7

A tubular passage construction 1 has a diameter of 50 cm and a length of 5 m, and is installed in its vertical position 25 m deep in the water. It includes an air supply chamber 2 below it which can contain 32.7ℓ of air (which is equal to 0.5 times the spheric volume having a diameter across the tubular passage). Air is fed into the air supply chamber at the rate of 1000 ℓ per minute, from which 8.7 air bubbles per minute are formed. Those air bubbles enter the tubular passage one after another, each raising the water at the average rate of 0.78 m/sec through the actual length of the tubular passage 1.

EXAMPLE 8

A tubular passage construction 1 has a diameter of 50 cm and a length of 10 m, and is installed in its vertical position 25 m deep in the water. It includes an air supply chamber 2 below it which can contain 32.7ℓ of air (which is equal to 0.5 times the spheric volume having a diameter across the tubular passage). Air is fed into the air supply chamber at the rate of 1000 ℓ per minute, from which 8.7 air bubbles per minute are formed. Those air bubbles enter the tubular passage one after another, each raising the water at the average rate of 1.13 m/sec through the actual length of the tubular passage 1.

EXAMPLE 9

A tubular passage construction 1 has a diameter of 50 cm and a length of 15 m, and is installed in its vertical position 25 m deep in the water. It includes an air supply chamber 2 below it which can contain 32.7ℓ of air (which is equal to 0.5 times the spheric volume having a diameter across the tubular passage). Air is fed into the air supply chamber at the rate of 1000 ℓ per minute, from which 8.7 air bubbles per minute are formed. Those air bubbles enter the tubular passage one after another, each raising the water at the average rate of 1.38 m/sec through the actual length of the tubular passage 1.

EXAMPLE 10

A tubular passage construction 1 has a diameter of 50 cm and a length of 5 m, and is installed in its vertical position 25 m deep in the water. It includes an air supply chamber 2 below it which can contain 196.2 ℓ of air (which is equal to 3.0 times the spheric volume having a diameter across the tubular passage). Air is fed into the air supply chamber at the rate of 1250 ℓ per minute, from which 1.8 air bubbles per minute are formed. Those air bubbles enter the tubular passage one after another, each raising the water at the average rate of 0.82 m/sec through the actual length of the tubular passage 1.

10

EXAMPLE 11

A tubular passage construction 1 has a diameter of 50 cm and a length of 10 m, and is installed in its vertical position 25 m deep in the water. It includes an air supply chamber 2 below it which can contain 196.2 ℓ of air (which is equal to 3.0 times the spheric volume having a diameter across the tubular passage). Air is fed into the air supply chamber at the rate of 1250 ℓ per minute, from which 1.8 air bubbles per minute are formed. Those air bubbles enter the tubular passage one after another, each raising the water at the average rate of 1.15 m/sec through the actual length of the tubular passage 1.

EXAMPLE 12

A tubular passage construction 1 has a diameter of 50 cm and a length of 15 m, and is installed in its vertical position 25 m deep in the water. In includes an air supply chamber 2 below it which can contain 196.2ℓ of air (which is equal to 3.0 times the spheric volume having a diameter across the tubular passage). Air is fed into the air supply chamber at the rate of 1250ℓ per minute, from which 1.8 air bubbles per minute are formed. Those air bubbles enter the tubular passage one after another, each raising the water at the average rate of 1.35 m/sec through the actual length of the tubular passage 1.

It should be noted that the number of times at which air bubbles are to be formed per minute in the above examples 1 to 12 may be calculated by dividing the quantity of air to be supplied per minute (at the atmospheric pressure) by the capacity of the air supply chamber and then dividing the result by the hydraulic pressure value within the air supply chamber plus one atmospheric pressure.

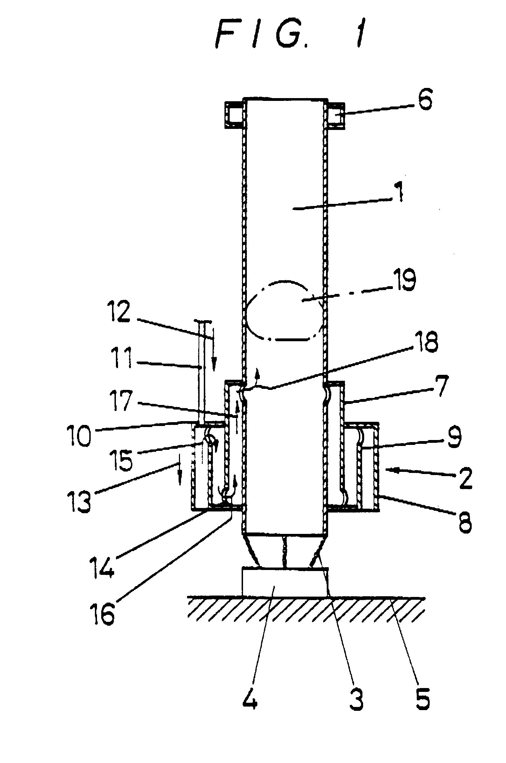

Referring to Fig. 1, the construction of the apparatus that may be used with the method of the present invention is described.

The apparatus includes a tubular passage construction 1 below which an air supply chamber 2 is located, and is mounted around the lower portion of the tubular construction 1. A weight 4 suspends from the bottom end of the tubular construction by means of a chain 3. The weight 4 rests on the bottom of the water 5 to maintain the tubular construction 1 in its stable position. A float room 6 is provided around the upper portion of the tubular construction 1. This float room 6 cooperates with the weight 4 so that the tubular construction 1 can be maintained in its vertical upright position.

The air supply chamber 2 consists of an inner cylindrical casing 7 and an outer cylindrical casing 8 which are mounted around the tubular construction 1 so that they can be spaced away from each other. The inner and outer cylindrical casings 7 and 8 are separated by an intermediate cylindrical casing 9.

A top panel 10 is mounted between the top end of the outer casing 8 and the lateral wall of the inner casing, from which an air delivery hose 11 extends to any suitable external air supply source (not shown). An air stream which usually has the compressed air form is supplied from the source through the hose 11 as indicated by an arrow 12, and into the air supply chamber 2. As the air stream is entering the air supply chamber 2, it accumulates in the upper space inside the air supply chamber 2. As air is increasing, it is gradually depressing the water present within the air supply chamber, as indicated by an arrow 13.

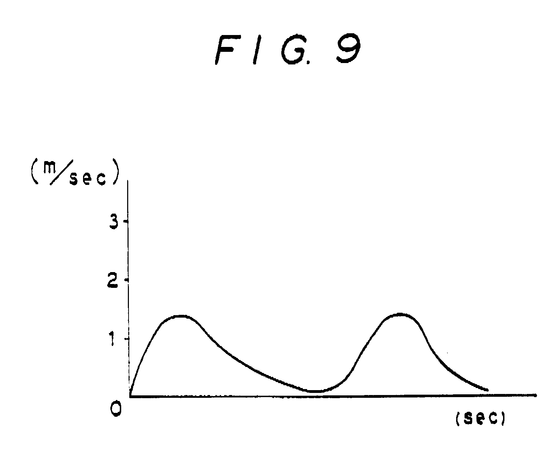

As the water level is falling down to the point where an air communicative hole 14 is located on the lower lateral wall of the inner casing 7, the inner and outer casings 7 and 8 communicate with each other through the hole 14, allowing air to flow from the outer casing 8 through the intermediate casing 9 into the inner casing 7 and then into the tubular passage 1, as indicated by arrows 15, 16, 17 and 18. Upon entry into the tubular passage 1, the air is formed into an air bubble 19, which is rising through the tubular passage with a gradually increasing speed until it reaches the top open end of the tubular passage from which it is jetted out. When the air bubble is rising, it expands with its outer periphery in contact with the internal wall of the tubular passage, and the force that makes the air bubble to rise is converted to the force that attracts the water following it. Thus, the water is also rising with more speeds. Once the air bubble goes out of the tubular passage, the attracting force disappears, but the water still continues to rise under its own inertia action. The behaviour of the rising water follows the curves as shown in Fig. 9. Before the inertia action is lost and therefore the water loses its rising force completely, a next succeeding air bubble is formed in the manner described above, which boosts the water. Subsequent operations occur in the same manner, and the water can be processed efficiently.

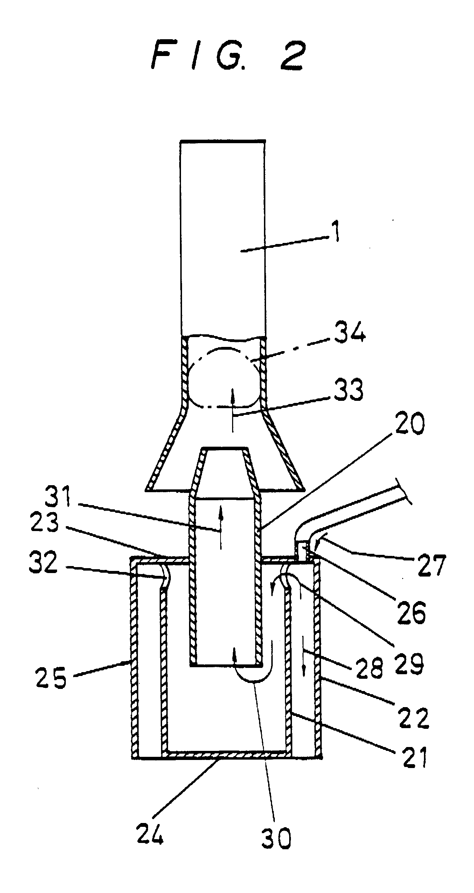

As shown in Fig. 2, the apparatus includes a separate air supply chamber 25 which is located below the tubular passage construction 1.

The air supply chamber 25 includes an elongated cylindrical casing 20 which provides an air passage leading to the tubular passage, and includes an inner cylindrical casing 21 and an outer cylindrical casing 22 mounted in a spaced relationship. A top panel 23 is mounted on the outer casing 22, through which the elongated cylindrical casing 20 extends inwardly and outwardly. The inner casing has its bottom closed by a bottom panel 24. An air delivery hose 26 extends from the top panel 23 to any suitable external air supply source (not shown). An air stream which usually has the compressed air form is supplied from the external air supply source, and is delivered through the hose 26 into the air supply chamber 25. As air is entering the air supply chamber as indicated by an arrow 27, it is accumulated in the upper space inside it, depressing the water within the air supply chamber, as indicated by an arrow 28. When the water level falls down to the point where the bottom end of the elongated cylindrical casing 20 is located, the air within the air supply chamber 25 is flowing through the air communicative hole 32 into the inner casing 21 and then into the elongated casing 20, as indicated by arrows 29, 30 and 31. Through the elongated casing 20, the air is rising into the tubular passage 1 as indicated by an arrow 33, and is then formed into an air bubble 34. The air bubble 34 is rising through the tubular passage with its outer periphery in intimate contact with the interior wall of the tubular passage 1. The force that makes the air bubble to rise is converted to the force that attracts the water following it. Thus, the water is rising with more speed under the attraction of the air bubble. The subsequent process is the same as for the preceding example.

In the examples 1 through 12, the tubular passage construction has a diameter of 30 cm or 50 cm, and has an actual length of 5 m, 10 m, or 15 m. The air supply chamber has a capacity which is substantially equal to 0.3, 0.5, or 3.0 times the spheric volume having a diameter across the tubular passage. In each example, the rate of the air or water that is rising has been determined from the appropriate value for the capacity of the air chamber as defined above.

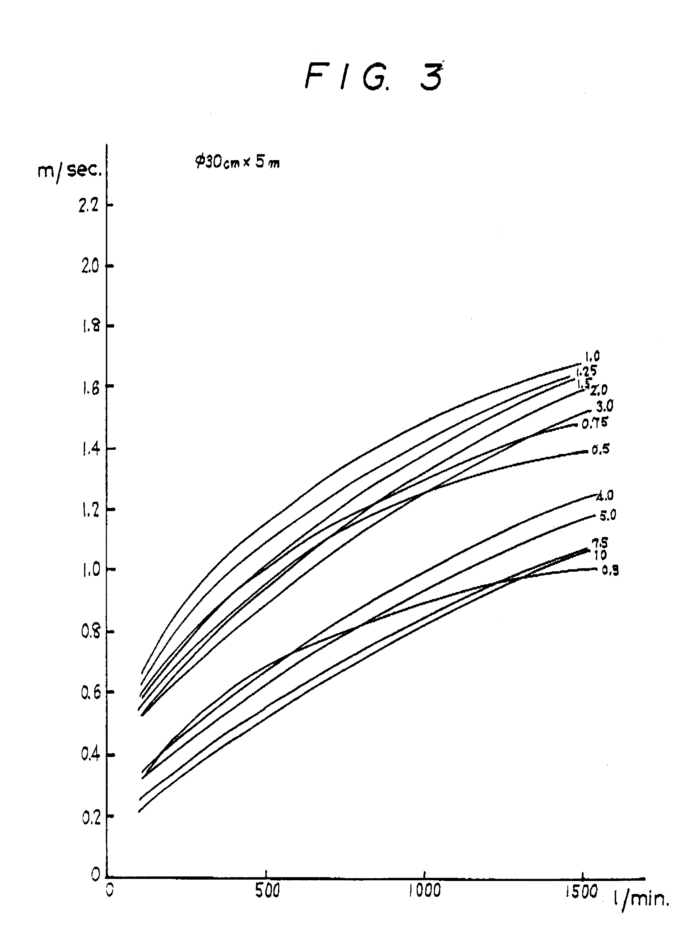

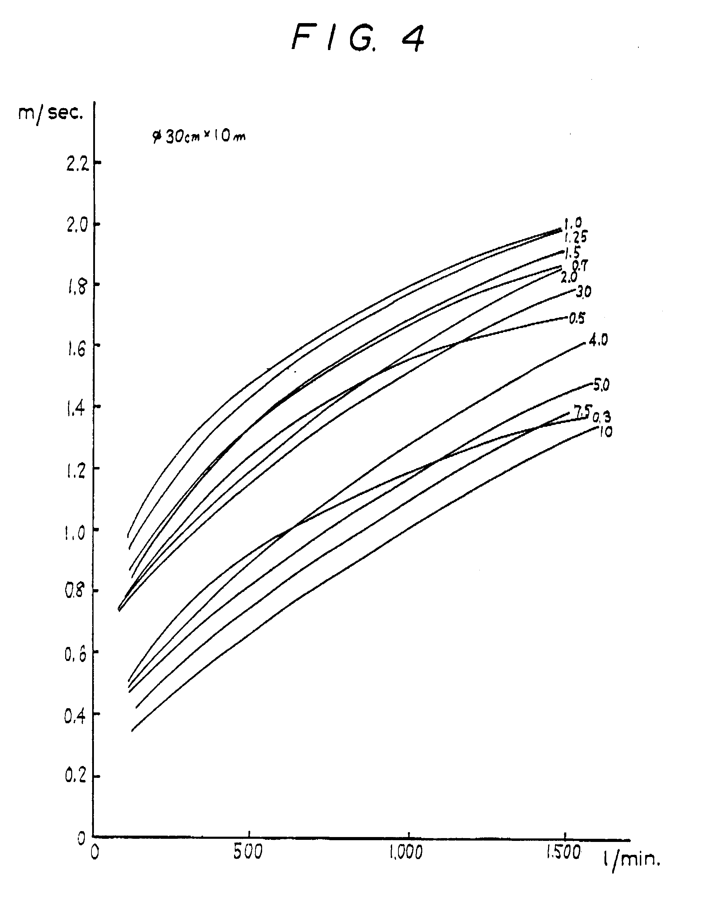

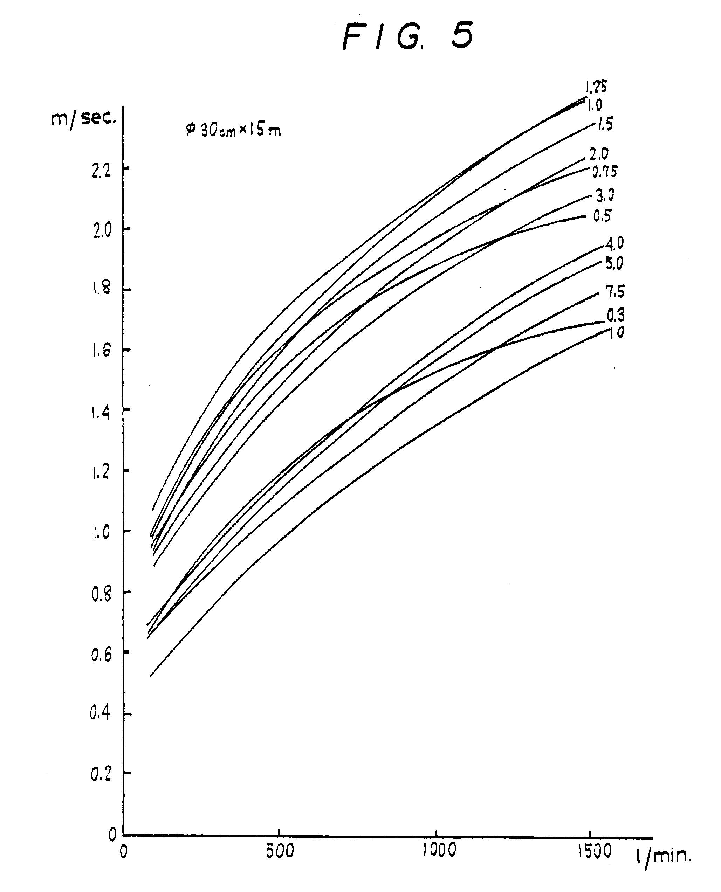

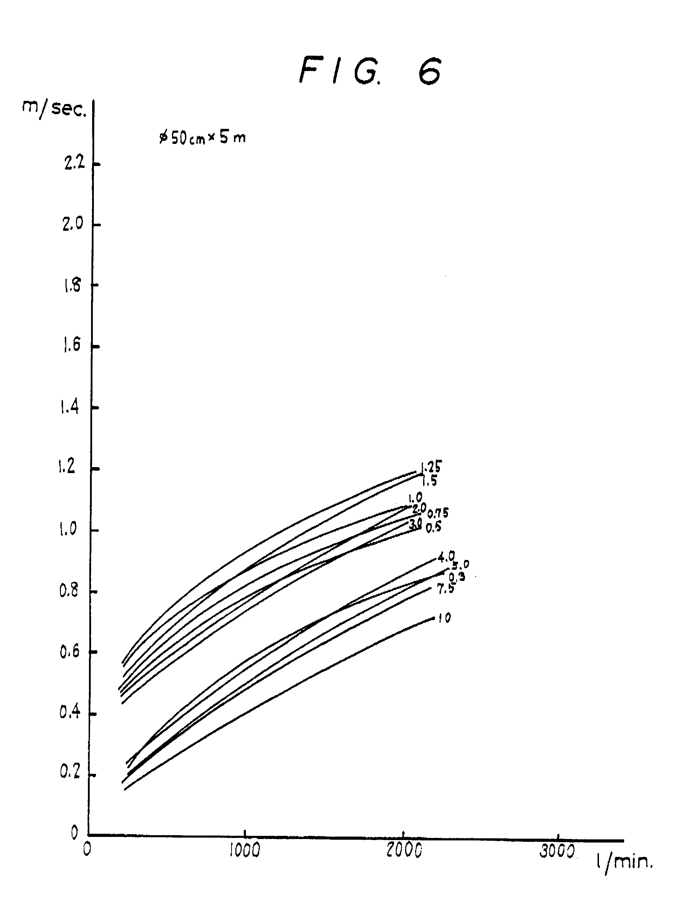

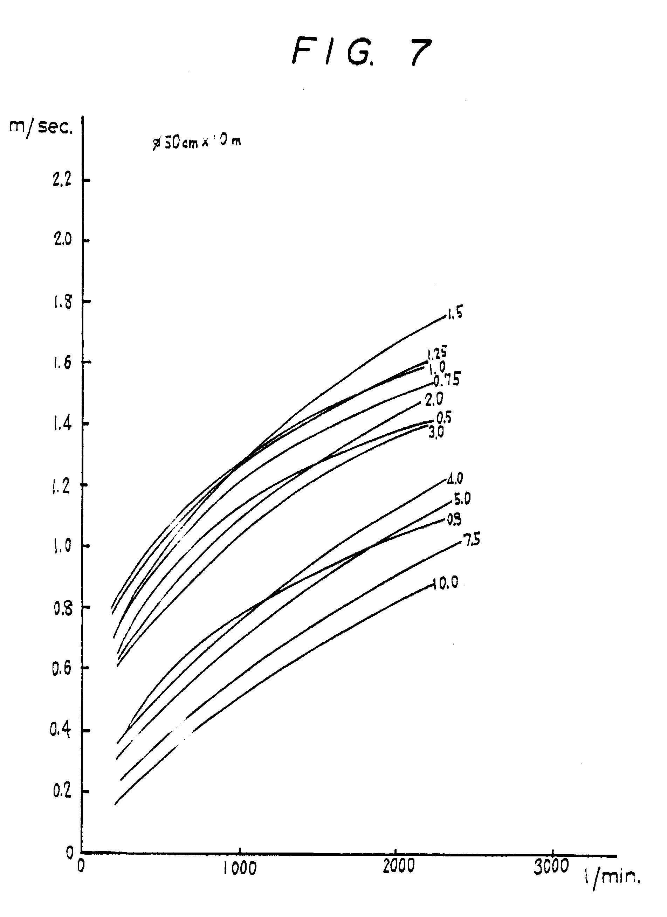

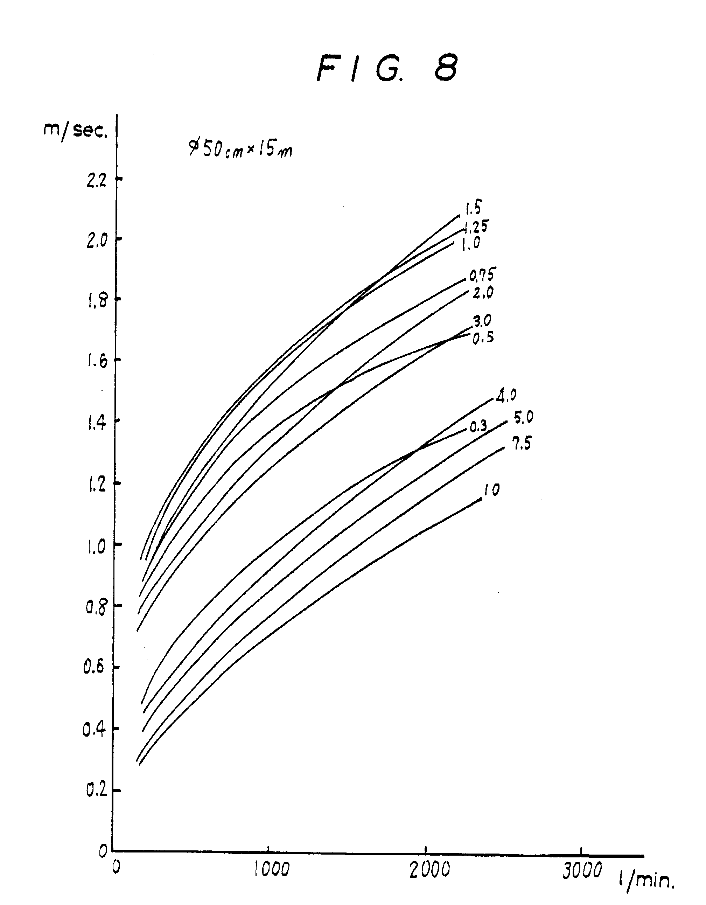

It should be understood that in describing those examples, the values presented represent the respective upper and lower limits. The tables 1 to 6 present the specific values that have been obtained from the experiments where for the particular diameter and length of the tubular passage, air is supplied at the rate of 100 ℓ/min. to 2000 ℓ/min. when the air supply chamber has a capacity of 0.3 to 10 times the spheric volume having a diameter across the tubular passage. Those values are plotted as shown in Figs. 3 through 8. It may be observed from each of those figures that, for a relatively small rate of the air supply, the water is being raised at a rapidly growing rate as the air supply is increasing, but when the air supply exceeds the threshold value, the rate at which the water is being raised becomes smaller with the increasing air supply. It follows from this fact that for a tubular passage diameter of 30 cm, the air supply that ranges between 300 ℓ/min. and 600 ℓ/min. may provide an efficient operation, and for a tubular passage diameter of 50 cm, the air supply that ranges between 600 ℓ/min. and 1200 ℓ/min. may also provide an efficient operation. For the optimum capacity of the air chamber that is represented as a factor of the spheric volume having the particular diameter across the tubular passage, the distinct value ranges , i.e., 0.5 to 3.0, 0.3, and 4.0 to 10,0, may be provided regardless of the particular tubular passage diameter (see Figs. 3 through 8).

The range of 0.75 and 1.5 provides the high efficiency, and may be the most useful for the practical purposes.

For the capacity of the air supply chamber, the practical range of a factor should advantageously be 0.5 to 3.0 times the spheric volume having a diameter across the tubular passage.

If air bubbles are formed one followed closely by another, the efficiency would be affected unfavorably. For this reason, the range should preferably by 0.75 to 1.5 times the spheric volume having a diameter across the tubular passage.

As it may be appreciated from the foregoing description, the method according to the present invention may advantageouly be applied to a tubular passage construction having a diameter of 30 cm or more. According to the method, the air supply chamber is made to provide the quantity of air at one time that is equal to 0.5 to 3.0 times the spheric volume having a diameter across the tubular passage. This improves the energy efficiency to a high degree. In particular, the quantity of air supply should have the range of 0.75 and 1.5, which provides the high efficiency and may be used most frequently for the practical purposes.

**Claims**

1.  A method of supplying air at specific periodic intervals and forming single air bubbles one after another, each single air bubble raising water under its suction and boosting action through a tubular passage construction, wherein the method comprises:

    supplying each single quantity of air at the said specific periodic intervals for forming the corresponding air bubble through a tubular passage construction having a diameter of 50 cm or more, each quantity of air having a volumetric capacity range of 0.5 to 3.0 times the spheric volume having the diameter of the tubular passage construction.

2.  A method as claimed in claim 1, wherein each single quantity of air is supplied using an air supply

EP 0 321 081 B1

chamber that takes advantage of siphon action and uses the water therein as an automatic valve, or using a pneumatic pump for supplying air at the said periodic intervals.

3. A method as claimed in claim 2, wherein the pneumatic pump uses siphon action and the water therein functions as an automatic valve, or uses an automatic valve for opening or closing by making use of air.

4. A method as claimed in any preceding claim, in which the average rate of supply of air (by volume at atmospheric pressure) is in the range of 600 to 1200 l/min.

5. A method as claimed in any preceding claim, in which the said volumetric capacity range is 0.75 to 1.5 times the said spheric volume.

6. A method as claimed in any preceding claim, in which the length of the tubular passage construction is in the range of 5 to 15 m.

**Revendications**

1. Procédé d'alimentation en air à des intervalles périodiques spécifiques et de formation de bulles d'air individuelles l'une après l'autre, chaque bulle d'air individuelle soulevant de l'eau sous l'effet de son action d'aspiration et de poussée, à travers une construction en forme de passage tubulaire, dans lequel le procédé comprend :
   le fait d'acheminer chaque quantité individuelle d'air auxdits intervalles périodiques spécifiques pour former la bulle d'air correspondante à travers une construction en forme de passage tubulaire ayant un diamètre de 50 cm ou plus, chaque quantité d'air ayant un domaine de capacité volumétrique correspondant à une valeur de 0,5 à 3,0 fois le volume sphérique dont le diamètre s'étend à travers la construction de passage tubulaire.

2. Procédé selon la revendication 1, dans lequel on achemine chaque quantité individuelle d'air en utilisant une chambre d'alimentation en air qui tire profit d'un effet de siphon et qui utilise l'eau qui y est contenue comme vanne automatique, ou bien en utilisant une pompe pneumatique pour acheminer l'air auxdits intervalles périodiques.

3. Procédé selon la revendication 2, dans lequel une pompe pneumatique utilise l'effet de siphon et l'eau qui y est contenue fait office de vanne automatique, ou bien elle utilise une vanne automatique pour l'ouverture ou la fermeture en utilisant de l'air.

4. Procédé selon l'une quelconque des revendications précédentes, dans lequel le débit moyen d'alimentation en air (en volume sous pression atmosphérique) se situe dans le domaine de 600 à 1200 ℓ/min.

5. Procédé selon l'une quelconque des revendications précédentes, dans lequel ledit domaine de capacité volumétrique est de 0,75 à 1,5 fois ledit volume sphérique.

6. Procédé selon l'une quelconque des revendications précédentes, dans lequel la longueur de la construction en forme de passage tubulaire se situe dans le domaine de 5 à 15 m.

**Patentansprüche**

1. Verfahren zur Zufuhr von Luft in bestimmten periodischen Zeitabständen und Bildung nacheinander freigesetzter, einzelner Luftblasen, wobei jede einzelne Luftblase infolge ihrer Saug- und Schubwirkung Wasser durch eine röhrenförmige Durchlaufkonstruktion fördert, wobei dieses Verfahren u.a. darin besteht, daß die Zufuhr der einzelnen Luftmengen in den genannten bestimmten Zeitabständen zur Bildung der entsprechenden Luftblase durch eine röhrenförmige Durchlaufkonstruktion mit einem Durchmesser von 50 cm oder mehr erfolgt und das Volumen jeder einzelnen Luftmenge etwa dem 0,5- bis 3,0-fachen des Volumens einer Kugel vom Durchmesser der röhrenförmigen Durchlaufkonstruktion entspricht.

2. Verfahren gemäß Anspruch 1, wobei die Zufuhr der jeweiligen einzelnen Luftmengen mit Hilfe einer Belüftungskammer, in der gemäß dem Siphonprinzip das darin befindliche Wasser als automatisches Ventil genutzt wird, oder mit Hilfe einer pneumatischen Pumpe zur Luftzufuhr in den genannten periodischen Zeitabständen erfolgt.

3. Verfahren gemäß Anspruch 2, wobei die pneumatische Pumpe nach dem Siphonprinzip arbeitet und das darin befindliche Wasser als automatisches Ventil wirkt, oder ein pneumatisch betätigtes Ventil zum Öffnen bzw. Schließen verwendet wird.

4. Verfahren gemäß einem der vorgenannten Ansprüche, wobei die Luftzufuhr mit einer durchschnittlichen Rate (volumenbezogen bei atmosphärischem Druck) im Bereich von 600 - 1200 l/min erfolgt.

5. Verfahren gemäß einem der vorgenannten Ansprüche, wobei der genannte Volumengehalt im Bereich des 0,75- bis 1,5-fachen des genannten Kugelvolumens liegt.

6. Verfahren gemäß einem der vorgenannten Ansprüche, wobei die Länge der röhrenförmigen Durchlaufkonstruktion im Bereich von 5 - 15 m liegt.

14

# F I G.  1

# F I G. 2

# F I G. 3

# F I G. 4

# F I G. 5

# F I G.   6

# F I G. 7

FIG. 8

# F I G. 9